# EUROPEAN PATENT SPECIFICATION

(11) **EP 3 226 047 B1**
(45) Date of publication and mention of the grant of the patent: **06.04.2022**
(21) Application number: 16176627.4
(22) Date of filing: 28.06.2016
(51) Int. Cl.: G02B 6/44

(54) **SINGLE LAYER OPTICAL FIBER CABLE FOR MICRODUCT APPLICATION**
KABEL AUS EINLAGIGER GLASFASER FÜR MIKROLEITUNGSANWENDUNG
CÂBLE À FIBRES OPTIQUES À COUCHE UNIQUE POUR APPLICATION DE MICRO-CONDUIT

(30) Priority: 29.03.2016 IN 201621010853
(43) Date of publication of application: 04.10.2017
(73) Proprietor: Sterlite Technologies Ltd, Maharashtra 431 136 (IN)
(72) Inventor: KUMAR, Sravan, 500039 Telangana (IN); KUMAR, Roshan, 851213 Bihar (IN); SRIVASTAVA, Shivam, Madhya Pradesh (IN)
(74) Representative: Hepworth Browne

(56) References cited:
- WO-A1-2015/055229
- US-B1- 8 913 862
- US-B2- 7 974 507
- Kdp: "FIBRE OPTIC CABLES Product Catalogue 2014/2015", , 1 January 2014 (2014-01-01), XP055365133, Retrieved from the Internet: URL:http://www.kabelovna.cz/files/KDP - Fiber Optic Catalogue 2014.pdf [retrieved on 2017-04-18]
- Cable77: "FIBER OPTIC CABLES AND FTTX PRODUCTS CATALOG", , 1 February 2016 (2016-02-01), XP055352835, Retrieved from the Internet: URL:http://www.gm-plast.dk/catalogue/multi ducts/catalog_cable77.pdf [retrieved on 2017-03-08]
- Kdp: "FIBER OPTIC CABLES Product Catalogue 2016", , 1 January 2016 (2016-01-01), XP055366276, Retrieved from the Internet: URL:http://www.kabelovna.cz/files/katalog/ 14.pdf [retrieved on 2017-04-21]
- Gigacom: "Gigacom FibreCore Airblown 200?m SC S12", , 21 September 2015 (2015-09-21), XP055352832, Retrieved from the Internet: URL:http://www.gigacom.se/fileadmin/user_u pload/qdoc/produkter/pdf/Gigacom_FibreCore _Airblown_200[mu]m_SC_S12.pdf [retrieved on 2017-03-08]

## Description

### TECHNICAL FIELD

The present application in based on, and claims priority from an Indian application number 201621010853 filed on 29th March, 2016**.** The present disclosure relates to the field of optical fiber cable and more specifically to a micro optical fiber cable for installation in ducts.

### BACKGROUND

Optical fiber cables have been increasingly employed for numerous industrial applications. One such type of optical fiber cable is micro optical fiber cables which are used for installation in ducts. These micro optical fiber cables have a small cable diameter which makes these cables suitable for installation in the ducts. A constant check is maintained on the diameter and a weight of the micro optical fiber cables for smooth installation. Traditionally, the micro optical fiber cables are installed by blowing the optical fiber cable into a duct while simultaneously pushing the optical cable into the duct. The blowing is done by injecting a high volume of compressed air into the duct which flows inside the duct at high speed. Accordingly, the high speed air propels the optical fiber cable further inside the duct. The optical fiber cable is blown with a cable blowing machine. Typically, the blowing performance of the cable blowing machine depends on the diameter and the weight of the micro optical fiber cable.

The currently available micro optical fiber cables have certain drawbacks. The existing micro optical fiber cables are not suitable for installation in smaller ducts due to the large diameter. In addition, the existing micro optical fiber cables are heavy. This leads to a poor blowing performance from the cable blowing machine. Further, the existing micro optical fiber cables have a dual layer construction. This increases the manufacturing time of the optical fiber cables. Also, there is a considerable risk of crushing of the inner layer in the dual layer design. Furthermore, the access to inner layers of the optical fiber cables during mid-spanning is difficult due to the dual layer design.

Document US7974507B2 discloses a fiber-optic cable that possesses a high cable filling coefficient (and/or a high cable fiber density) yet ensures that its enclosed optical fibers demonstrate improved attenuation performance when subjected to temperature variations between about -40° C and 70° C. The fiber-optic cable is suitable for efficient installation into ducts, such as via blowing. In light of the foregoing discussion, there exists a need for an optical fiber cable which overcomes the above cited drawbacks of conventionally known optical fiber cables.

### SUMMARY

An optical fiber cable suitable for installation in ducts according to the invention is defined in the independent claim. Different embodiments are set out in the dependent claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:

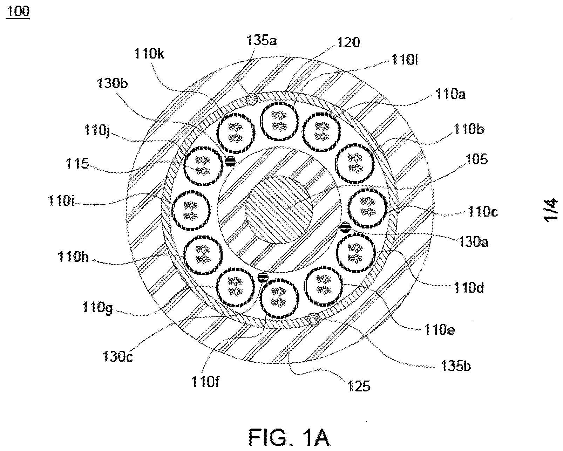

FIG. 1A illustrates a cross sectional view of an optical fiber cable, in accordance with an embodiment of the present disclosure; and

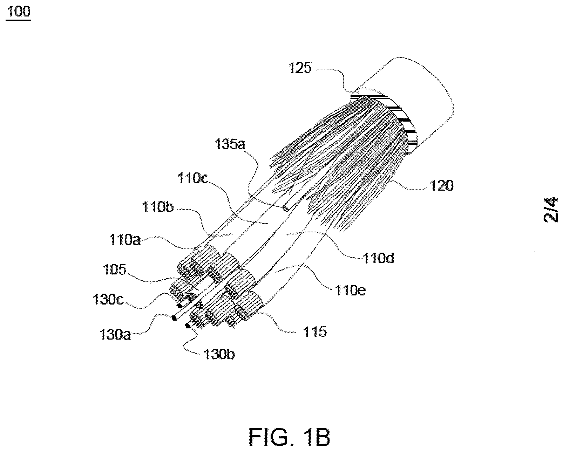

FIG. 1B illustrates a perspective view of the optical fiber cable of FIG. 1A, in accordance with an embodiment of the present disclosure;

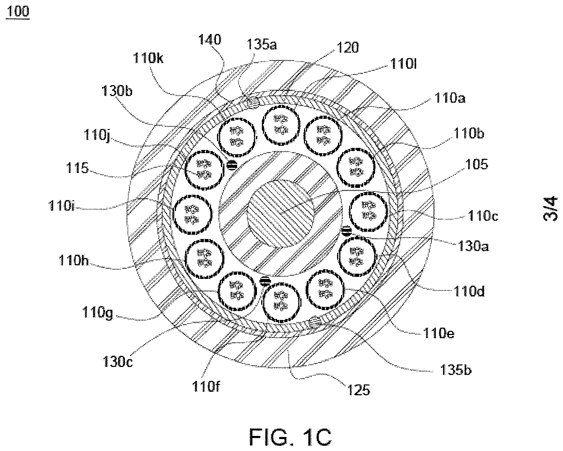

FIG. 1C illustrates a perspective view of an optical fiber cable, in accordance with another embodiment of the present disclosure; and

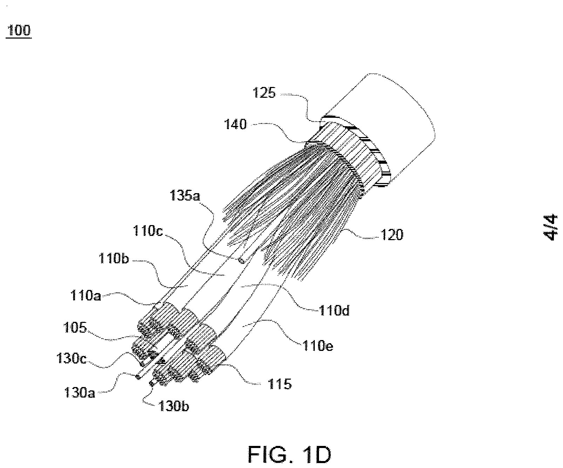

FIG. 1D illustrates a perspective view of the optical fiber cable of FIG. 1C, in accordance with another embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

In one aspect, an embodiment of the present disclosure provides an optical fiber cable. The optical fiber cable includes a central strength member. The central strength member lies substantially along a longitudinal axis of the optical fiber cable. In addition, the optical fiber cable includes one or more buffer tubes stranded around the central strength member. Moreover, the optical fiber cable includes a first layer. The first layer surrounds the one or more buffer tubes. Further, the optical fiber cable includes a second layer. The second layer surrounds the first layer. Each of the one or more buffer tubes encloses 24 optical fibers. Each of the optical fibers has a diameter of about 200 microns. The first layer includes one or more yarns. In addition, the first layer 5 acts as a binding element for the one or more buffer tubes. The optical fiber cable has an outer diameter of about 8.8 millimeter and a weight of about 85 kilograms per kilometer.

According to an embodiment, the optical fiber cable is a micro optical fiber cable. The micro optical fiber cable is used for installation in micro ducts. In addition, the optical fiber cable is used for underground installations. Also, the optical fiber cable is used for communication, and the like. In an embodiment of the present disclosure, the optical fiber cable is a 288F micro optical fiber cable. In addition, 288F corresponds to 288 optical fibers.

In an embodiment, the optical fiber cable has a small diameter which makes the optical fiber cable suitable for installation in the micro ducts. Furthermore, the optical fiber cable has a reduced cable weight. The optical fiber cable is used to transmit optical signals (which may carry sensor data or communication data). In an embodiment of the present disclosure, a tensile strength of the optical fiber cable is about 2000 Newton. In another embodiment of the present disclosure, the tensile strength of the optical fiber cable is in a range of 0 Newton - 2000 Newton. The tensile strength corresponds to a resistance shown by the optical fiber cable against buckling.

The optical fiber cable has an outer diameter of about 8.8 millimeters. For example, the optical fiber cable has the outer diameter in a range of 8.8 millimeters ± 0.3 millimeter. Moreover, the optical fiber cable has a weight of about 85 kilograms per kilometer. The optical fiber cable has a weight in a range of 85 kilograms per kilometer ± 10 percent. In an embodiment, the reduced outer diameter and the reduced weight enable blowing of the optical fiber cable in the small ducts. In an embodiment of the present disclosure, the optical fiber cable has a crush resistance of about 500 Newton and a fiber packing density of about 90 percent. In an embodiment of the present disclosure, the optical fiber cable has a crush resistance in a range of 0-500 Newton. In an embodiment of the present disclosure, the optical fiber cable has the fiber packing density in a range of 90 percent ± 5 percent. In an embodiment of the present disclosure, the optical fiber cable has a fill factor in a range of 30 percent to 55 percent. The fill factor of the optical fiber cable corresponds to a ratio of a cross section area of the optical fiber cable and ratio of a cross section area of the duct.

In an embodiment, the optical fiber cable is installed in one or more ducts. The one or more ducts corresponds to a micro duct. In addition, each of the one or more ducts is a polyethylene duct. The one or more ducts are configured for installation of the micro optical fiber cable for long distances. In an example, each of the one or ducts has an outer diameter size present in a range of 16 millimeters to 18 millimeters. Further, the micro duct is a duct with a small diameter. In addition, the micro duct is flexible or semi-flexible. Further, the micro duct is designed to provide clean, continuous and low-friction paths for placing the optical fiber cable.

In an example, each of the one or more ducts may be pre-lubricated by a manufacturer to avoid lubrication during the installation. In another example of the present disclosure, each of the one or more ducts is lubricated during the installation of the optical fiber cable. The one or more ducts have a low coefficient of friction for installation of the optical fiber cable over large distances. Furthermore, the optical fiber cable is installed inside the duct by a cable jetting technique. The cable jetting technique follows a cable blowing method for blowing the optical fiber cable inside a duct of the duct. The optical fiber cable is blown into the duct by using compressed air. The cable blowing is performed by utilizing special equipment produced by various manufacturers. The special equipment corresponds to a cable jetting machine or a cable blowing machine. The cable blowing machine utilizes high volume air compressors.

The central strength member lies substantially along a longitudinal axis of the optical fiber cable. In an embodiment, the central strength member may be coated with a layer of polyethylene. In another embodiment, the central strength member may be coated with any suitable material. In yet another embodiment, the central strength member may not be coated. The material includes but may not be limited to high density polyethylene, medium density polyethylene and polypropylene. In an embodiment, the central strength member has a circular cross-section.

In an embodiment, the central strength member is made of a composite material having a polymer matrix. The composite material is flexible fiber reinforced plastic.

The fiber reinforced plastic is a composite material having a polymer matrix reinforced with glass fibers. Examples of the fiber reinforced plastics include glass fibers, carbon fibers, aramid fibers, basalt fibers and the like. In another embodiment, the central strength member is made of any suitable material. Moreover, the central strength member provides physical strength to the optical fiber cable and resists over bending of the optical fiber cable. The central strength member provides tensile strength to the optical fiber cable.

In an embodiment, the central strength member is characterized by a diameter measured along the cross section. In an embodiment, the diameter of the central strength member along with the polyethylene coating is about 4.80 millimeters. In another embodiment, the diameter of the central strength member along with the polyethylene coating is in a range of 4.80 millimeters ± 0.2 millimeter. The diameter corresponds to addition of the diameter of the central strength member and thickness of the polyethylene coating. In an embodiment, the diameter of the central strength member may vary. Also, the central strength member prevents buckling of the optical fiber cable.

The one or more buffer tubes is stranded around the central strength member to form a stranded core. Each of the one or more buffer tubes is a micro loose tube. Each of the one or more buffer tubes is a tube for encapsulating the plurality of optical fibers. In an embodiment, the central strength member is surrounded by the one or more buffer tubes. The one or more buffer tubes is S-Z stranded around the central strength member. Each of the one or more buffer tubes is wound around the central strength member in sections with a first direction of winding in an S-shape alternating with the sections with a second direction of winding in a Z-shape. In an embodiment of the present disclosure, the first direction is a clockwise direction and the second direction is an anticlockwise direction. The binding is performed to retain lay length of the stranded plurality of sleeves and uniform stress distribution along length of the optical fiber cable. The S-Z fashion of stranding is a form of stranding of the one or more buffer tubes. In addition, the S-Z stranding allows uniform distribution of the stress across all the one or more buffer tubes. The S-Z stranding may have any number of turns between the S-shape and the Z-shape.The helical stranding is turning of each of the one or more buffer tubes around the central strength member periodically in a pre-defined direction. The pre-defined direction is either a clockwise direction or an anticlockwise direction.

In an embodiment, the stranding of the one or more buffer tubes is performed in order to to maintain a uniform lay length, mid-spanning and achieve higher production speeds as compared to Helical stranding. In general, the lay length is a longitudinal distance along length of the central strength member required for one buffer tube to go all the way around the central strength member. In an embodiment of the present disclosure, the lay length of the one or more buffer tubes is about 85 millimeters. In another embodiment of the present disclosure, the lay length of the one or more buffer tubes is in a range of 85 millimeters ± 5 millimeters. In yet another embodiment of the present disclosure, the lay length of the one or more buffer tubes may vary.

In an embodiment, the cross section of each of the one or more buffer tubes is circular in shape. In another embodiment, the cross section of each of the one or more buffer tubes may be of any suitable shape. In an embodiment, each of the one or more buffer tubes has a uniform structure and dimensions. In an embodiment of the present disclosure, a number of the one or more buffer tubes is 12. In another embodiment of the present disclosure, the number of the one or more buffer tubes may vary.

In an embodiment, each of the one or more buffer tubes has same thickness. In an embodiment of the present disclosure, the thickness of each of the one or more buffer tubes is about 0.20 millimeter. In another embodiment of the present disclosure, the thickness of each of the one or more buffer tubes is in a range of 0.20 millimeter ± 0.02 millimeter. In yet another embodiment of the present disclosure, the thickness of each of the one or more buffer tubes may vary.

In an embodiment, an inner diameter and an outer diameter of each of the one or more buffer tubes is fixed. In an embodiment of the present disclosure, the inner diameter of each of the one or more buffer tubes is about 1.20 millimeter. In another embodiment of the present disclosure, the inner diameter of each of the one or more buffer tubes is in a range of 1.20 millimeter ± 0.05 millimeter. In yet another embodiment of the present disclosure, the inner diameter of each of the one or more buffer tubes may vary. In an embodiment of the present disclosure, the outer diameter of each of the one or more buffer tubes is about 1.60 millimeter. In another embodiment of the present disclosure, the outer diameter of each of the one or more buffer tubes is in a range of 1.60 millimeter ± 0.05 millimeter. In yet another embodiment of the present disclosure, the outer diameter of each of the one or more buffer tubes may vary.

Each of the one or more buffer tubes encloses the plurality of optical fibers. In addition, each of the one or more buffer tubes encloses 24 optical fibers. The one or more buffer tubes provides support and protection to each of the plurality of optical fibers against crush, bend and stretch. In addition, the one or more buffer tubes protects the plurality of optical fibers and prevents ingression of water inside the stranded core of the optical fiber cable. Further, the one or more buffer tubes provides mechanical isolation, physical damage protection and identification of each of the plurality of optical fibers. In an embodiment of the present disclosure, the one or more buffer tubes provides a single layer core construction.

In an embodiment, each of the one or more buffer tubes is colored. In an embodiment, each of the one or more buffer tubes has a different color. In addition, total number of colors available for coloring the buffer tubes is 12. The coloring is done for identification of each of the one or more buffer tubes. The colors include blue, orange, green, brown, gray, white, red, black, yellow, violet, pink and aqua.

In an embodiment, each of the one or more buffer tubes is filled with a gel. The gel is a thixotropic gel. In an embodiment of the present disclosure, the thixotropic gel is used for filling in empty spaces inside each of the one or more buffer tubes. In an embodiment of the present disclosure, the thixotropic gel prevents ingression of water inside each of the one or more buffer tubes.

According to an embodiment, each of the plurality of optical fibers is a fiber used for transmitting information as light pulses from one end to another. In addition, each of the plurality of optical fibers is a thin strand of glass or plastic capable of transmitting optical signals. Also, each of the plurality of optical fibers is configured to transmit large amounts of information over long distances with relatively low attenuation. Further, each of the plurality of optical fibers includes a core region and a cladding region. The core region is an inner part of an optical fiber and the cladding section is an outer part of the optical fiber. Moreover, the core region is defined by a central longitudinal axis of each of the plurality of optical fibers. In addition, the cladding region surrounds the core region.

Each of the optical fibers has a diameter of about 200 micron. Each of the plurality of optical fibers has a diameter in a range of 200 micron ± 10 micron. In embodiments not according to the invention, the diameter of each of the plurality of optical fibers may vary. Each of the plurality of optical fibers is a standard ITU-T G.652D silica optical fiber. In an embodiment of the present disclosure, each of the plurality of optical fibers is a single mode fiber. In another embodiment of the present disclosure, each of the plurality of optical fibers is a multimode fiber.

In an embodiment, a number of the plurality of optical fibers in each of the one or more buffer tubes is 24. In another embodiment, the number of the plurality of optical fibers in each of the one or more buffer tubes is more or less than 24. The number of the plurality of optical fibers in each buffer tube may vary depending upon the cable requirements. In an embodiment, a total number of the plurality of optical fibers in the optical fiber cable is 288 (24 fibers^{∗} 12 buffer tubes). In an embodiment, the total number of the plurality of optical fibers may be more or less than 288 depending upon the number of buffer tubes and the optical fibers in each buffer tube.

In an embodiment, each of the plurality of optical fibers is a colored optical fiber. In an embodiment, each of the plurality of optical fibers has a different color. The total number of colors available for coloring the optical fibers is 12. The coloring is done for identification of each of the plurality of optical fibers. The colors include blue, orange, green, brown, gray, white, red, black, yellow, violet, pink and aqua. The color repeats when the number of the plurality of optical fibers exceeds more than 12. In an embodiment of the present disclosure, a number of optical fibers with same color in each of the one or more buffer tubes are 2.

The first layer surrounds the one or more buffer tubes. The first layer includes one or more yarns. In addition, the first layer binds the one or more buffer tubes. The first layer acts as a binding element for the one or more buffer tubes. In an embodiment, each of the one or more yarns is a binder yarn. The binder yarn is made of a material. In an embodiment, the binder yarn is made of polyester. In another embodiment, the binder yarn is made of aramid. In yet another embodiment, the binder yarn is made of polypropylene. Each of the one or more yarns is a yarn thread. The binder yarn facilitates absorption of water and moisture. In addition, each of the one or more yarns prevents ingression of the water inside the optical fiber cable. In an embodiment, the optical fiber cable may have any number of yarn threads. In an embodiment, the first layer binds the stranded one or more buffer tubes to prevent opening up of the S-Z stranded one or more buffer tubes. In an embodiment, the first layer provides retention of the lay length of the one or more buffer tubes. The first layer acts as a strengthening element for the one or more buffer tubes.

The second layer surrounds the first layer. In an embodiment, the second layer is made of polyethylene. In another embodiment, the second layer is made of any suitable material. The material includes medium density polyethylene, high density polyethylene, polypropylene, nylon and the like. The second layer is characterized by a thickness. In an embodiment, the second layer has a thickness of about 0.45 millimeter. In another embodiment, the second layer has the thickness in the range of 0.45 millimeter ± 0.05 millimeter. In yet another embodiment, the thickness of the second layer may vary. In an embodiment, the second layer is black in color. In another embodiment, the second layer may be of any color. The second layer interacts directly with ambient environment. In an embodiment, the second layer is a sheathing layer. The second layer protects the optical fiber cable against the crush, the bend and tensile stress along the length of the optical fiber cable.

According to an embodiment, the plurality of water swellable yarns is positioned between the one or more buffer tubes. The plurality of water swellable yarns prevents ingression of water in the stranded core of the optical fiber cable. In an embodiment, the number of the plurality of water swellable yarns is 3. In another embodiment, the number of the plurality of water swellable yarns may vary.

According to an embodiment, the plurality of ripcords is embedded in the first layer. The plurality of ripcords lies substantially along the longitudinal axis of the optical fiber cable. The plurality of ripcords facilitate stripping of the second layer. In an embodiment, the plurality of ripcords are made of a polyester material. In another embodiment, the plurality of ripcords are made of any suitable material. In an embodiment, each of the plurality of ripcords has circular cross-section. In an embodiment, a number of the plurality of ripcords are 2. In another embodiment, the number of the one or more ripcords may vary.

According to an embodiment, the optical fiber cable includes a peripheral strength member placed between the first layer and the second layer. In an embodment, the peripheral strength member lies substantially along the longitudinal axis of the optical fiber cable. The peripheral strength member provides an extra tensile strength to the optical fiber cable. In another embodiment, the optical fiber cable may not include the peripheral strength member. In an embodiment, the peripheral strength member is made of aramid yarn. In another embodiment, the peripheral strength member is made of any other suitable material.

### DETAILED DESCRIPTION

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

Referring now to the drawings, particularly by their reference numbers, **FIG. 1A** illustrates a cross-sectional view of an optical fiber cable **100** for installation in micro ducts, in accordance with an embodiment of the present disclosure. The optical fiber cable **100** includes a central strength member **105,** one or more buffer tubes **110a-1101,** a plurality of optical fibers **115,** a first layer **120** and a second layer **125** (as seen in **FIG. 1A** in conjunction with the perspective view of the optical fiber cable **100** provided in **FIG. 1B**). In addition, the optical fiber cable **100** includes a plurality of water swellable yarns **130a-130c** and a plurality of ripcords **135a-135b.** The central strength member **105** lies substantially along a longitudinal axis of the optical fiber cable **100.** The one or more buffer tubes **110a-110l** is stranded around the central strength member **105** to form a stranded core. In addition, each of the one or more buffer tubes **110a-110l** encloses the plurality of optical fibers **115.** Further, the first layer **120** surrounds the one or more buffer tubes **110a-110l**. Moreover, the first layer **120** binds the one or more buffer tubes **110a-110l.** Furthermore, the second layer **125** surrounds the first layer **120.** The plurality of water swellable yarns **130a-130c** is positioned over the one or more buffer tubes **110a-110l.** Also, the plurality of ripcords **135a-135b** is embedded in the first layer **120.**

Further, the optical fiber cable **100** includes a peripheral strength member **140** placed between the first layer **120** and the second layer **125** (as seen in **FIG. 1C** in conjunction with the perspective view of the optical fiber cable **100** provided in **FIG. 1D**).

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. An optical fiber cable (100) comprising:
a central strength member (105) lying substantially along a longitudinal axis of the optical fiber cable (100);
one or more buffer tubes (110a-1101) S-Z stranded around the central strength member (105),
each of the one or more buffer tubes (110a-1101) are wound around the central strength member (105) in sections with a first direction of winding in an S-shape alternating with the sections with a second direction of winding in a Z-shape and the first direction is a clockwise direction and the second direction is an anticlockwise direction, each of the one or more buffer tubes (110a-110l) encloses 24 optical fibers (115) and each of the optical fibers (115) has a diameter of 200 ± 10 microns;
a first layer (120) surrounding the one or more buffer tubes (110a-110l), the first layer (120) comprises one or more yarns; ; and
a second layer (125) surrounding the first layer (120),
**characterized in that** the optical fiber cable (100) has an outer diameter of 8.8 millimeters and a weight of 85 kilograms per kilometer ± 10 percent; and
the first layer (120) acts as a strengthening element as well as a binding element for the one or more buffer tubes (110a-110l).

2. The optical fiber cable (100) according to claim 1, further comprising:
a plurality of water swellable yarns (130a-130c) positioned over the one or more buffer tubes (110a-110l), wherein
the plurality of water swellable yarns (130a-130c) prevent ingression of water inside a stranded core of the optical fiber cable (100).

3. The optical fiber cable (100) according to claim 1, further comprising:
a plurality of ripcords (135a-135b) embedded in the first layer (120) and lying substantially along the longitudinal axis of the optical fiber cable (100), wherein
the plurality of ripcords (135a-135b) facilitates stripping of the second layer (125).

4. The optical fiber cable (100) according to claim 1, wherein the central strength member (105) is coated with a layer of polyethylene, the central strength member (105) provides tensile strength to the optical fiber cable (100), the tensile strength of the optical fiber cable (100) is 2000 Newton and the central strength member (105) has a diameter of 4.80 millimeters.

5. The optical fiber cable (100) according to claim 1, 2. wherein the central strength member (105) is not coated.

6. The optical fiber cable (100) according to claim 1, wherein each of the one or more yarns is a binder yarn and the binder yarn is made of a material selected from a group consisting of polyester, aramid and polypropylene.

7. The optical fiber cable (100) according to claim 1, wherein each of the one or more buffer tubes (110a-110l) is filled with a gel, the gel is a thixotropic gel and the thixotropic gel prevents ingression of water in the one or more buffer tubes (110a-110l).

8. The optical fiber cable (100) according to claim 1, wherein the second layer (125) is made of polyethylene and the second layer (125) has a thickness of 0.45 millimeter.

9. The optical fiber cable (100) according to claim 1, wherein each of the one or more buffer tubes (110a-110l) has an inner diameter of 1.20 millimeters, an outer diameter of 1.60 millimeters, a thickness of 0.20 millimeter and a lay length of 85 millimeters.

10. The optical fiber cable (100) according to claim 1, further comprising:
a peripheral strength member (140) placed between the first layer (120) and the second layer (125) and lying substantially along the longitudinal axis of the optical fiber cable (100) and wherein the peripheral strength member (140) is made of aramid yarn.

11. The optical fiber cable (100) according to claim 1, wherein the optical fiber cable (100) has a fill factor in a range of 30 percent to 55 percent.

## Patentansprüche

1. Ein Lichtwellenleiterkabel (100), das aufweist:
ein zentrales Trägerelement (105), das im Wesentlichen entlang einer Längsachse des Lichtwellenleiterkabels (100) angeordnet ist;
eine oder mehrere Bündeladern (110a-110l), die in S-Z-Verseilung um das zentrale Trägerelement (105) verseilt sind, wobei jede der einen oder mehreren Bündeladern (110a-110l) um das zentrale Trägerelement (105) in Abschnitten mit einer ersten Wickelrichtung in S-Form gewickelt ist, die sich mit den Abschnitten mit einer zweiten Wickelrichtung in Z-Form abwechseln, und wobei es sich bei der ersten Richtung um eine Richtung im Uhrzeigersinn und bei der zweite Richtung um eine Richtung entgegen dem Uhrzeigersinn handelt, jede der einen oder mehreren Bündeladern (110a-110l) 24 Lichtwellenleiter (115) umschließt und jeder der Lichtwellenleiter (115) einen Durchmesser von 200 ± 10 Mikron aufweist;
eine erste Lage (120), welche die eine oder mehreren Bündeladern (110a-110l) umgibt, wobei die erste Lage (120) ein oder mehrere Garne aufweist;
und
eine zweite Lage (125), die die erste Lage (120) umschließt,
**dadurch gekennzeichnet, dass** das Lichtwellenleiterkabel (100) einen Außendurchmesser von 8,8 Millimetern und ein Gewicht von 85 Kilogramm pro Kilometer ± 10 Prozent aufweist; und
die erste Lage (120) sowohl als Stützelement als auch als Bindeelement für die eine oder mehreren Bündeladern (110a-1101) dient.

2. Das Lichtwellenleiterkabel (100) nach Anspruch 1, das ferner aufweist:
eine Vielzahl von wasserquellbaren Garnen (130a-130c), die um die eine oder die mehreren Bündeladern (110a-110l) positioniert sind, wobei die Vielzahl von wasserquellbaren Garnen (130a-130c) das Eindringen von Wasser in einen verseilten Kern des Lichtwellenleiterkabels (100) verhindern.

3. Das Lichtwellenleiterkabel (100) nach Anspruch 1, das ferner aufweist:
eine Vielzahl von Reißfäden (135a-135b), die in die erste Lage (120) eingebettet sind und im Wesentlichen entlang der Längsachse des Lichtwellenleiterkabels angeordnet sind, wobei die Vielzahl von Reißfäden (135a-135b) das Abisolieren der zweiten Lage (125) erleichtert.

4. Das Lichtwellenleiterkabel (100) nach Anspruch 1, wobei das zentrale Trägerelement (105) mit einer Schicht aus Polyethylen beschichtet ist, das zentrale Trägerelement (105) die Zugfestigkeit des Lichtwellenleiterkabels (100) herstellt, die Zugfestigkeit des Lichtwellenleiterkabels (100) 2000 Newton beträgt und das zentrale Trägerelement (105) einen Durchmesser von 4,80 Millimetern aufweist.

5. Das Lichtwellenleiterkabel (100) nach Anspruch 1, wobei das zentrale Trägerelement (105) nicht beschichtet ist.

6. Das Lichtwellenleiterkabel (100) nach Anspruch 1, wobei jedes des einen oder der mehreren Garne ein Bindegarn ist und das Bindegarn aus einem Werkstoff besteht, der aus einer Gruppe ausgewählt wird, der Polyester, Aramid und Polypropylen angehören.

7. Das Lichtwellenleiterkabel (100) nach Anspruch 1, wobei jede der einen oder mehreren Bündeladern (110a-110l) mit einem Gel gefüllt ist, das Gel ein thixotropes Gel ist und das thixotrope Gel das Eindringen von Wasser in die eine oder mehreren Bündeladern (110a-110l) verhindert.

8. Das Lichtwellenleiterkabel (100) nach Anspruch 1, wobei die zweite Lage (125) aus Polyethylen besteht und die zweite Lage (125) eine Dicke von 0,45 Millimetern aufweist.

9. Das Lichtwellenleiterkabel (100) nach Anspruch 1, wobei jede der einen oder mehreren Bündeladern (110a-110l) einen Innendurchmesser von 1,20 Millimetern, einen Außendurchmesser von 1,60 Millimetern, eine Dicke von 0,20 Millimetern und eine Schlaglänge von 85 Millimetern aufweist.

10. Das Lichtwellenleiterkabel (100) nach Anspruch 1, das ferner aufweist:
ein peripheres Zugentlastungselement (140), das zwischen der ersten Lage (120) und der zweiten Lage (125) angeordnet ist und im Wesentlichen entlang der Längsachse des Lichtwellenleiterkabels (100) angeordnet ist, und wobei das periphere Zugentlastungselement (140) aus Aramidgarn besteht.

11. Das Lichtwellenleiterkabel (100) nach Anspruch 1, wobei das Lichtwellenleiterkabel (100) einen Füllfaktor in einem Bereich zwischen 30 Prozent und 55 Prozent aufweist.

## Revendications

1. Câble à fibre optique (100) comprenant :
un organe de renfort central (105) disposé sensiblement le long d'un axe longitudinal du câble à fibre optique (100) ;
un ou plusieurs tubes tampons (110a-1101) S-Z guipés autour de l'organe de renfort central (105), chacun du ou des plusieurs tubes tampons (110a-1101) étant guipés autour de l'organe de renfort central (105) en segments avec une première direction de guipage en "S" alternant avec des segments d'une deuxième direction de guipage en "Z", la première direction étant dans le sens horaire, et la deuxième direction étant dans le sens antihoraire, chacun du ou des plusieurs tubes tampons (110a-1101) renfermant 24 fibres optiques (115) et chacune des fibres optiques (115) présentant un diamètre de 200 ± 10 microns ;
une première couche (120) entourant le ou les plusieurs tubes tampons (110a-1101), la première couche (120) comprenant un ou plusieurs fils ; et
une deuxième couche (125) entourant la première couche (120), **caractérisé en ce que** le câble à fibre optique (100) présente un diamètre extérieur de 8,8 millimètres et un poids de 85 kilogrammes au kilomètre + 10 pour cent ; et
la première couche (120) se comporte comme un élément de renfort aussi bien qu'en tant qu'élément de liaison pour le ou les plusieurs tubes tampons (110a-1101).

2. Câble à fibre optique (100) selon la revendication 1, comprenant en outre :
une pluralité de fils hydrogonflables (130a-130c) positionnée sur le ou les plusieurs tubes tampons (110a-1101), selon lequel la pluralité de fils hydrogonflables (130a-130c) prévient contre l'ingression d'eau à l'intérieur d'une âme guipée du câble à fibre optique (100).

3. Câble à fibre optique (100) selon la revendication 1, comprenant en outre :
une pluralité de cordes de déchirure (135a-135b) encastrée dans la première couche (120) et disposée sensiblement le long de l'axe longitudinal du câble à fibre optique (100), selon lequel la pluralité de cordes de déchirure (135a-135b) facilite l'enlèvement de la deuxième couche (125).

4. Câble à fibre optique (100) selon la revendication 1, selon lequel l'organe central de renfort (105) est revêtu d'une couche de polyéthylène, l'organe central de renfort (105) fournissant une résistance à la rupture au câble à fibre optique (100), la résistance à la rupture du câble à fibre optique (100) étant de 2000 newton et l'organe central de renfort (105) présente un diamètre de 4,80 millimètres.

5. Câble à fibre optique (100) selon la revendication 1, selon lequel l'organe central de renfort (105) ne présente pas de revêtement.

6. Câble à fibre optique (100) selon la revendication 1, selon lequel chacun du ou des plusieurs fils est un fil de liaison et le fil de liaison est constitué d'un matériau choisi dans le groupe consistant en le polyester, l'aramide et le polypropylène.

7. Câble à fibre optique (100) selon la revendication 1, selon lequel chacun du ou des plusieurs tubes tampons (110a-1101) est rempli d'un gel, et le gel est gel thixotrope et le gel thixotrope empêche l'ingression d'eau dans le ou les plusieurs tubes tampons (110a-1101).

8. Câble à fibre optique (100) selon la revendication 1, selon lequel la deuxième couche (125) est constituée de polyéthylène et la deuxième couche (125) présente une épaisseur de 0,45 millimètre.

9. Câble à fibre optique (100) selon la revendication 1, selon lequel chacun du ou des plusieurs tubes tampons (110a-1101) présente un diamètre intérieur de 1,20 millimètres, un diamètre extérieur de 1,60 millimètres, une épaisseur de 0,20 millimètre et une longueur de pas de câble de 85 millimètres.

10. Câble à fibre optique (100) selon la revendication 1, comprenant en outre :
un organe périphérique de renfort (140) placé entre la première couche (120) et la deuxième couche (125) et disposé sensiblement le long de l'axe longitudinal du câble à fibre optique (100) et selon lequel l'organe périphérique de renfort (140) est constitué de fil aramide.

11. Câble à fibre optique (100) selon la revendication 1, selon lequel le câble à fibre optique (100) présente un coefficient de remplissage se situant dans la plage de 30 pour cent à 55 pour cent.
